# FASCICULE DE BREVET EUROPEEN

(11) **EP 3 108 026 B1**
(45) Date de publication et mention de la délivrance du brevet: **13.12.2017**
(21) Numéro de dépôt: 15706879.2
(22) Date de dépôt: 03.02.2015
(51) Int. Cl.: C23C 4/02, B23P 9/02, B23C 3/32

(54) **PROCÉDÉ DE PRÉPARATION DE SURFACE AVANT REVÊTEMENT PAR PROJECTION THERMIQUE**
VERFAHREN ZUR VORBEREITUNG EINER OBERFLÄCHE VOR DEM THERMISCHEN SPRÜHBESCHICHTEN
METHOD FOR PREPARING A SURFACE BEFORE THERMAL SPRAY-COATING

(30) Priorité: 18.02.2014 FR 1451299
(43) Date de publication de la demande: 28.12.2016
(73) Titulaire: Comau France, 78197 Trappes Cedex (FR)
(72) Inventeur: FIORONI, Claude, 81100 Castres (FR); BOUSQUET, Vincent, 81100 Castres (FR); GEA, Frédéric, 81290 Labruguiere (FR); SERENI, Sandrine, 81710 Saix (FR)
(74) Mandataire: Richebourg, Michel François
(86) Numéro de dépôt international: PCT/FR2015/050237
(87) Numéro de publication internationale: WO 2015/124841

(56) Documents cités:
- EP-A1- 2 505 300
- WO-A1-2006/061710
- FR-A1- 2 972 373
- FR-A1- 2 973 810
- US-A1- 2010 101 526

## Description

### DOMAINE D'APPLICATION DE L'INVENTION

La présente invention a trait au domaine du dépôt de matériau au moyen d'une projection thermique et notamment aux adaptations permettant de préparer la surface accueillant ledit matériau dans les meilleures conditions.

### DESCRIPTION DE L'ART ANTÉRIEUR

Le dépôt par projection thermique et notamment par torche plasma d'un revêtement métallique sur une surface est un procédé de surface classiquement utilisé en réparation de pièces mécaniques usées.

Il est aussi utilisé de façon avantageuse pour le revêtement localisé de pièces complexes où des conditions particulières d'utilisation sont requises. C'est le cas par exemple pour le revêtement des cylindres des carters de moteurs d'automobiles. En effet, ces carters tendent à être fabriqués en matériau léger tel l'aluminium mais les cylindres doivent présenter des caractéristiques supérieures de frottement et de résistance à l'usure.

Alors qu'une première solution consiste à mouler les carters d'aluminium autour des cylindres en fonte tels des inserts de moulage, une autre solution consiste à déposer par torche plasma un acier pour servir de revêtement aux cylindres. En comparaison avec la première solution, le dépôt d'un matériau par torche plasma a pour avantage de proposer pour les cylindres un revêtement plus fin avec une meilleure conductibilité thermique. De plus, le revêtement créé est poreux permettant une lubrification meilleure, ce qui contribue à améliorer le rendement du moteur.

Toutefois, l'accrochage de ces matériaux dans cet exemple, ne peut être obtenu que de façon mécanique. La mise en oeuvre d'un tel procédé requiert ainsi la réalisation d'une surface sur le substrat à revêtir capable de retenir, par blocage mécanique après refroidissement, la couche de métal projeté à l'état quasi liquide. Des rainures proposant des surfaces en contre dépouille sont classiquement réalisées.

Jusqu'à aujourd'hui, la réalisation d'une telle surface nécessitait l'utilisation d'un outil complexe susceptible de former, par enlèvement de matière, une surface rainurée avec un profil complexe de rainure adapté. Les coûts de conception et d'exploitation d'un tel outil spécial et son procédé de travail dédié font que le procédé de revêtement par torche plasma n'est finalement exploité que pour les petites séries.

Le document EP 2 505 300 A1 décrit par exemple un tel procédé de préparation de la surface d'un substrat à l'aide d'un outil d'usinage.

### DESCRIPTION DE L'INVENTION

Partant de cet état de fait, la demanderesse a mené des recherches visant à permettre une exploitation moins onéreuse d'un procédé de dépôt de revêtement par torche plasma en proposant un procédé de préparation de la surface d'accueil au moyen d'une opération d'usinage moins onéreuse susceptible d'être réalisée par un outil standard.

Selon l'invention, le procédé de préparation de la surface d'un substrat à des fins d'accueil et de retenue d'un revêtement projeté par torche plasma, ledit procédé étant du type de celui comprenant une phase d'usinage, est remarquable en ce qu'il comprend les phases suivantes :
- réaliser au moyen d'un outil d'usinage au moins, une rainure avec au moins un bord incliné,
- décaler l'outil, dans un mouvement relatif de l'outil par rapport à la surface du substrat, selon une direction perpendiculaire à l'axe longitudinal de la rainure et selon une course inférieure à la longueur projetée du bord incliné,
- appliquer ledit outil sur le bord incliné de la rainure de façon à soumettre ce bord à une contrainte et créer une autre rainure décalée et ainsi de suite de sorte que les nervures finalement obtenues entre chaque rainure se déforment de façon irréversible sous l'action de l'outil et adoptent des surfaces en contre-dépouille.

Il apparaît en effet qu'en exploitant de façon originale les arêtes de coupe d'un outil en lui faisant former par enlèvement de matière et déformer par déformation plastique une rainure en repassant dedans, il est possible d'obtenir des déformations de matière formant des rainures adoptant un profil avec des surfaces en contre-dépouille.

La création de surfaces en contre-dépouille sans utilisation d'outil de forme particulièrement coûteux facilite la nécessaire préparation du substrat. Un procédé consistant en la succession de telles opérations présente donc des effets techniques nouveaux.

Selon une autre caractéristique de l'invention, l'outil est de préférence un outil de fraisage mis en rotation par rapport à la pièce.

Selon une autre caractéristique de l'invention, l'outil est de préférence un outil avec une pluralité d'arêtes de coupe adoptant un profil sensiblement triangulaire.

Selon une autre caractéristique de l'invention, l'outil est de préférence un outil peigne de taraudage. L'utilisation nouvelle d'un outil connu facilite la mise en oeuvre du procédé de l'invention et contribue aux objectifs de l'invention. De plus, les déformations constatées sur les nervures obtenues à la surface du substrat se présentent sous la forme de vaguelettes. La nervure déformée vient recouvrir partiellement la rainure adjacente avec une extrémité distale revenant vers le fond de rainure. En effet, par passages successifs du peigne, les nervures ou les rainures les séparant finissent par fléchir (en leur sommet) et tendent vers la nervure ou rainure adjacente.

Un tel profil est particulièrement performant pour à la fois accueillir le métal quasi liquide mais également pour bloquer mécaniquement le revêtement formé.

Selon une autre caractéristique de l'invention, l'outil suit une trajectoire par interpolation hélicoïdale au moyen d'une machine-outil à commande numérique. En effet, les rainures peuvent être réalisées aussi bien selon une succession de trajectoires parallèles ou selon une progression synchronisant la rotation de l'outil et l'avancée de ce dernier.

Selon un mode de réalisation préféré de l'invention, l'outil peigne réalise des usinages successifs selon un pas correspondant à une division du pas pour lequel il est préformé. De préférence, l'outil peigne réalise des usinages successifs selon un pas correspondant à une division par 4 du pas pour lequel il est préformé.

Selon un mode de réalisation préféré mais non limitatif, le substrat est constitué par la surface intérieure d'alésages réalisés dans un carter en aluminium moulé à des fins de constitution des cylindres et le revêtement projeté par torche plasma est de l'acier.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un procédé conforme à l'invention.

### BRÈVE DESCRIPTION DES DESSINS

La figure 1 est un dessin schématique d'un outil peigne de taraudage devant s'appliquer sur la surface d'un alésage devant recevoir un revêtement par projection plasma;
La figure 2 est un dessin schématique d'une vue de détail en section de l'outil et de l'usinage réalisé sur la surface de l'alésage par l'outil;
La figure 3 est un dessin schématique de détail en section de l'outil en cours d'usinage selon un premier décalage de l'outil,
La figure 4 est un dessin schématique de détail en section de l'outil et de l'usinage réalisé selon le premier décalage;
La figure 5 est un dessin schématique de détail en section de l'outil en cours d'usinage selon un deuxième décalage de l'outil,
La figure 6 est un dessin schématique de détail en section de l'outil et de l'usinage réalisé selon le deuxième décalage;
La figure 7 est un dessin schématique de détail en section de l'outil en cours d'usinage selon un troisième décalage de l'outil,
La figure 8 est un dessin schématique de détail en section de l'outil et de l'usinage réalisé selon le troisième décalage;

### DESCRIPTION Du MODE DE RÉALISATION

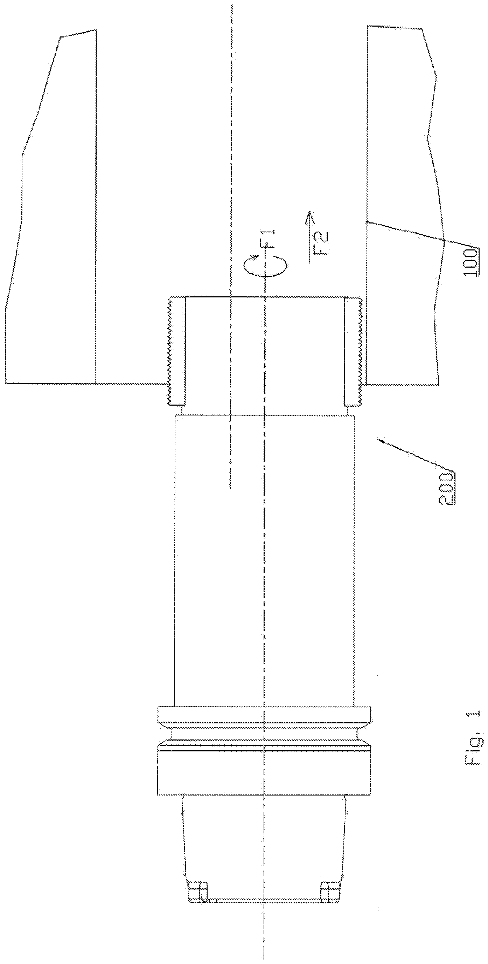

Comme illustré par sur le dessin de la figure 1, le procédé de préparation de la surface de l'alésage 100 à des fins d'accueil et de retenue d'un revêtement métallique est mis en oeuvre par un outil peigne 200 entrainé en rotation selon la flèche F1 et qui va venir en contact avec la surface de l'alésage 100 selon une première position puis être successivement décalé axialement selon la flèche F2 et revenir au contact de l'alésage conformément à l'invention.

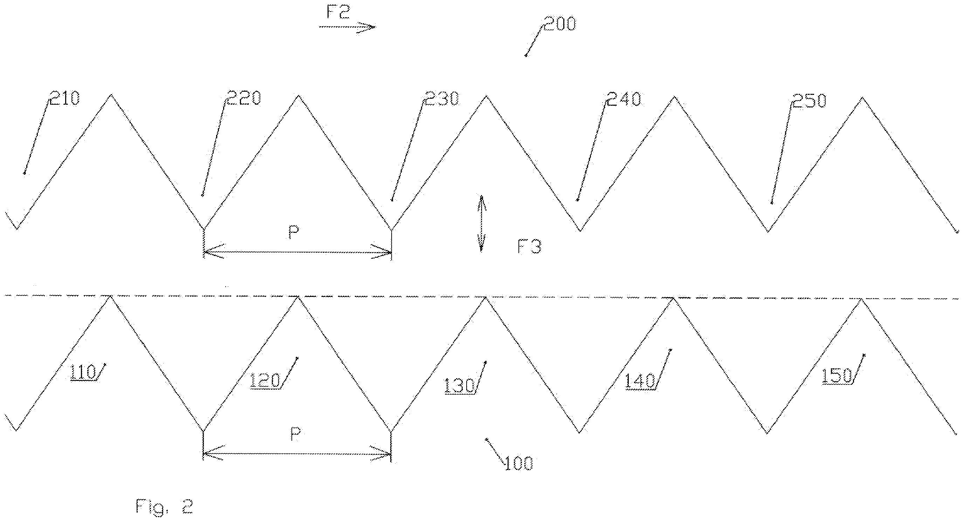

La succession des figures 2 à 8 illustre le détail de la succession des usinages de 5 formes triangulaires 210, 220, 230, 240, 250 constituant une partie des arêtes de coupe de l'outil 200.

Comme illustrée sur le dessin de la figure 2, conformément à un usinage classique, la course d'usinage de l'outil en rotation 200, course illustrée par la double-flèche F3, a conduit les formes 210, 220, 230, 240 et 250 à la réalisation par enlèvement de matière de rainures et de nervures complémentaires 110, 120, 130, 140, 150 de profil sensiblement identique et selon un pas P correspondant au pas P défini par les formes de l'outil.

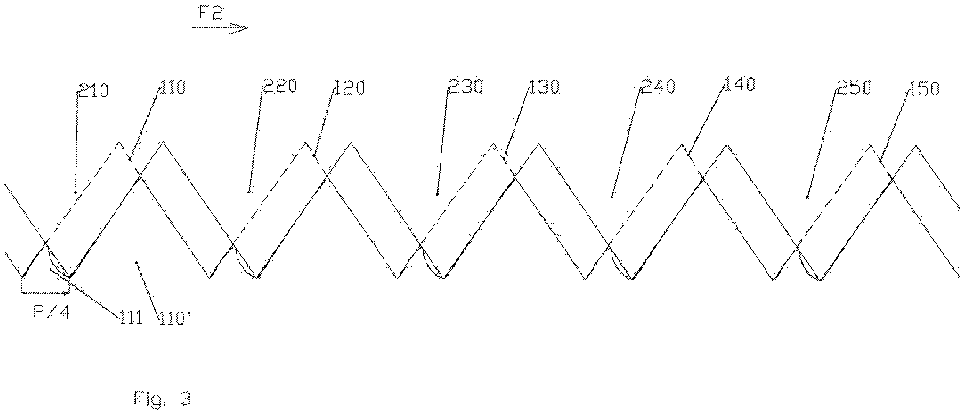

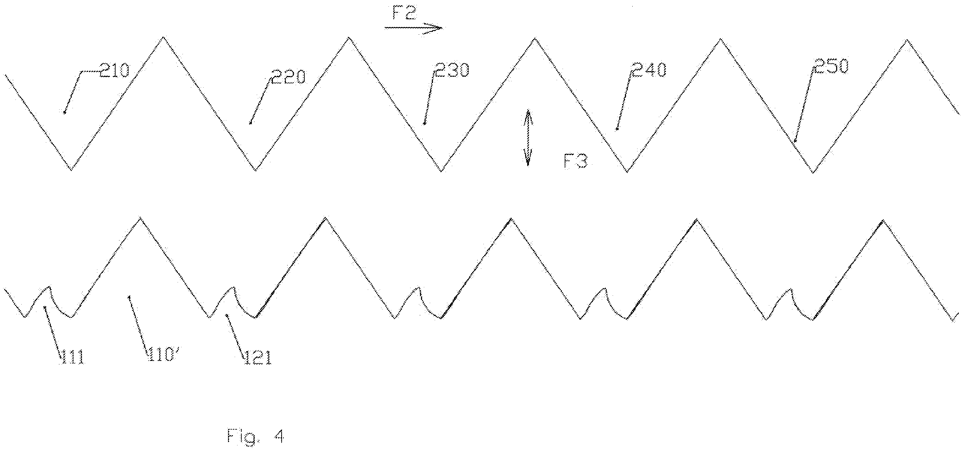

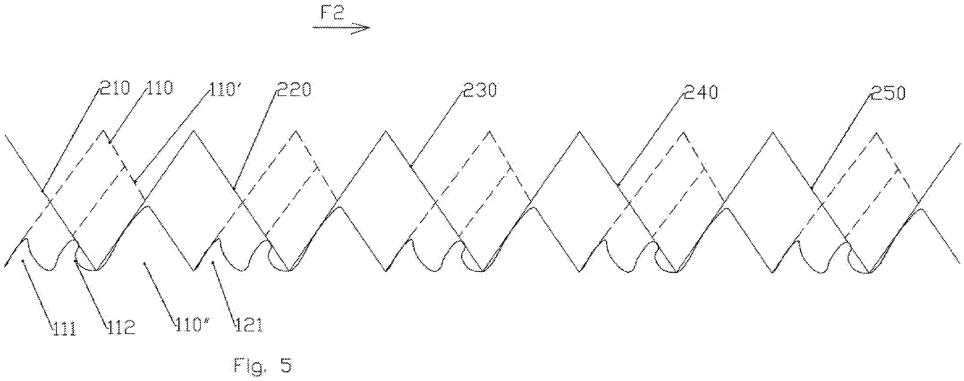

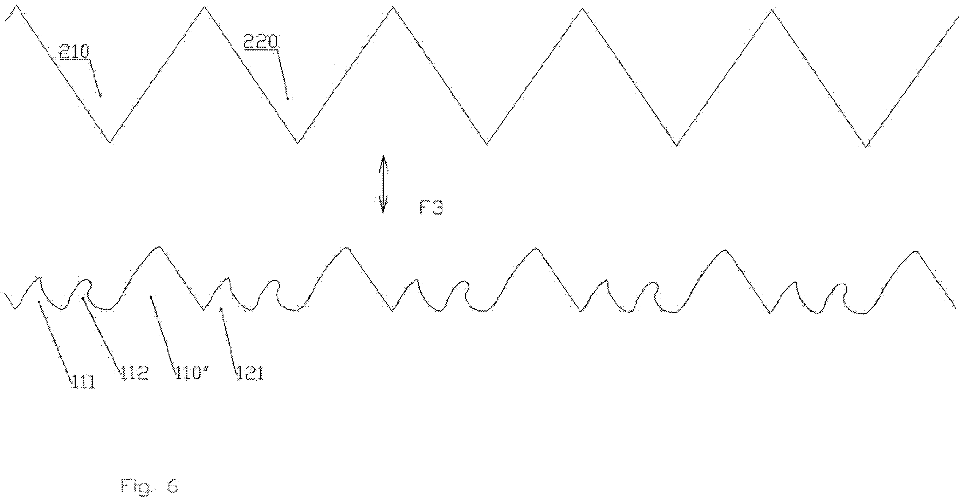

Comme illustré sur le dessin de la figure 3, un décalage correspondant à un quart du pas P et une course d'usinage équivalente conduisent les formes 210, 210, 230, 240, 250 à venir usiner l'alésage en venant en contact avec ce dernier sur les surfaces inclinées des nervures 110, 120, 130, 140, 150 déjà réalisées en créant deux nervures plus petites. Conformément à l'invention, ce décalage constitue une course inférieure à la longueur projetée du bord incliné de la rainure, le principe étant de revenir réaliser un usinage sur la surface inclinée venant d'être réalisée.
En prenant l'exemple de la nervure 110, pour chaque première nervure usinée, une petite nervure 111 et une nervure plus grande 110' résultent de ce nouvel usinage.
Comme illustrée sur les dessins des figures 3 et 4, la contrainte exercée lors de l'usinage par la forme triangulaire 210 sur le plan incliné usiné dans l'usinage précédent de coupe 200 et la réduction du pied de la nervure conduisent à la déformation plastique des deux nervures 111, 110' créées. La déformation de la petite nervure 111 est supérieure à la déformation de la nervure plus grande 110' et présente des surfaces en contre-dépouille. Il en est de même pour l'ensemble des nervures.
Comme illustrés sur les dessins des figures 5 et 6, un décalage supplémentaire et une course d'usinage équivalents conduisent à l'usinage de la nervure 110' et à la création :
- d'une deuxième petite nervure 112 de taille sensiblement équivalente à la première petite nervure 111 mais avec une déformation plus prononcée du fait de la déformation de la nervure 110' dans l'usinage précédent,
- d'une troisième nervure plus grande 110'' elle même ayant subi une déformation.

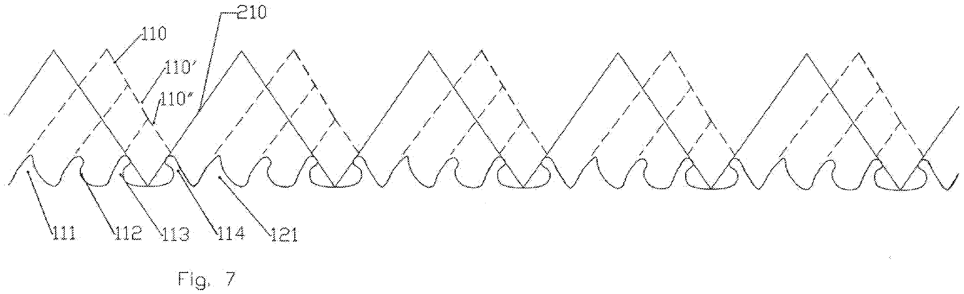

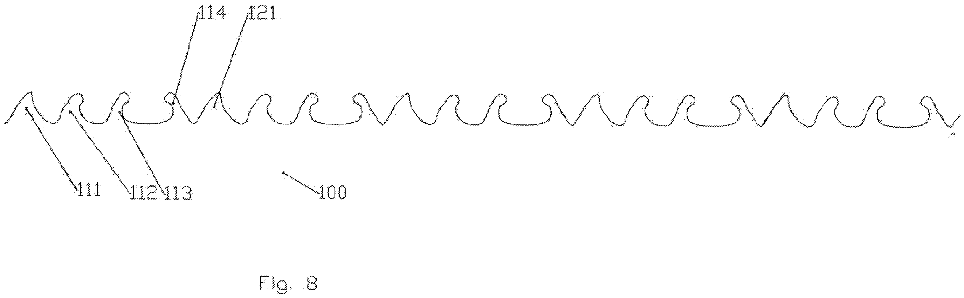

Enfin, comme illustrés sur les dessins des figures 7 et 8, un décalage supplémentaire et une course d'usinage équivalents conduisent à l'usinage de la nervure 110'' et à la création :
- de deux petites nervures supplémentaire 113 et 114 de taille sensiblement équivalente aux deux premières 111 et 112 mais avec une déformation plus prononcée notamment pour la quatrième 114 du fait de la déformation de la nervure 110'' mais également de la création de la nervure 211 à proximité.

Ainsi, de façon inattendue, il apparaît que la succession des usinages réalisés dans ces conditions provoque non la reproduction fidèle d'une version sous dimensionnée des profils des formes de l'outil de coupe mais la déformation des profils et la création de formes en contre-dépouille permettant l'accueil et le blocage mécanique recherchés pour un revêtement par projection thermique. Selon un premier test, cette déformation a été constatée sur une surface d'un substrat en aluminium moulé.

On comprend que le procédé, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de préparation de la surface d'un substrat (100) à des fins d'accueil et de retenue d'un revêtement projeté par torche plasma, ledit procédé étant du type de celui comprenant une phase d'usinage, **CARACTÉRISÉ EN CE QU'**il comprend les phases suivantes :
- réaliser, au moyen d'un outil d'usinage (200) au moins, une rainure avec au moins un bord incliné,
- décaler l'outil (200), dans un mouvement relatif de l'outil par rapport à la surface du substrat (100), selon une direction perpendiculaire à l'axe longitudinal de la rainure et selon une course inférieure à la longueur projetée du bord incliné,
- appliquer ledit outil (200) sur le bord incliné de la rainure de façon à soumettre ce bord à une contrainte et créer une autre rainure décalée et ainsi de suite de sorte que les nervures (111, 112, 113, 114) finalement obtenues entre chaque rainure se déforment de façon irréversible sous l'action de l'outil (200) et adoptent des surfaces en contre-dépouille.

2. Procédé selon la revendication 1, **CARACTÉRISÉ EN CE QUE** l'outil (200) est un outil de fraisage mis en rotation par rapport à la pièce.

3. Procédé selon la revendication 1, **CARACTÉRISÉ EN CE QUE** l'outil (200) est un outil de fraisage présentant une pluralité d'arêtes de coupe adoptant un profil sensiblement triangulaire

4. Procédé selon la revendication 2, **CARACTÉRISÉ EN CE QUE** l'outil (200) est un outil peigne de taraudage.

5. Procédé selon la revendication 2, **CARACTÉRISÉ EN CE QUE** l'outil (200) suit une trajectoire par interpolation hélicoïdale au moyen d'une machine-outil à commande numérique.

6. Procédé selon la revendication 4, **CARACTÉRISÉ EN CE QUE** l'outil peigne (200) réalise des usinages successifs selon un pas correspondant à une division du pas pour lequel il est préformé.

7. Procédé selon la revendication 6, **CARACTÉRISÉ EN CE QUE** l'outil peigne (200) réalise des usinages successifs selon un pas correspondant à une division par 4 du pas pour lequel il est préformé.

## Patentansprüche

1. Verfahren zur Herstellung der Oberfläche eines Substrats (100) zu Zwecken der Aufnahme und des Rückhalts einer Beschichtung, die von einem Plasmabrenner projiziert wurde, wobei das Verfahren vom Typ desjenigen ist, umfassend eine Bearbeitungsphase, **dadurch gekennzeichnet, dass** es die folgenden Schritte umfasst:
- Durchführen, mit Hilfe eines Bearbeitungswerkzeugs (200), mindestens einer Nut mit mindestens einem geneigten Rand,
- Versetzen des Werkzeugs (200) in einer relativen Bewegung des Werkzeugs mit Bezug auf die Oberfläche des Substrats (100) gemäß einer senkrechten Richtung zur Längsachse der Nut und gemäß einem Weg von weniger als der projizierten Länge des geneigten Rands,
- Anwenden des Werkzeugs (200) auf den geneigten Rand der Nut, um diesen Rand einer Spannung zu unterziehen und eine versetzte weitere Nut zu erzeugen und so weiter, so dass sich die Rippen (111, 112, 113, 114), die schließlich zwischen jeder Nut erhalten werden, sich auf unumkehrbare Weise unter der Einwirkung des Werkzeugs (200) verformen und Oberflächen in Hinterschneidung annehmen.

2. Verfahren nach Anspruch 1, **dadurch gekennzeichnet, dass** das Werkzeug (200) ein Fräswerkzeug ist, das mit Bezug auf das Werkstück in Drehung versetzt wird.

3. Verfahren nach Anspruch 1, **dadurch gekennzeichnet, dass** das Werkzeug (200) ein Fräswerkzeug ist, das eine Vielzahl von Schneidkanten aufweist, die ein im Wesentlichen dreieckiges Profil annehmen.

4. Verfahren nach Anspruch 2, **dadurch gekennzeichnet, dass** das Werkzeug (200) ein Innengewindestrehler ist.

5. Verfahren nach Anspruch 2, **dadurch gekennzeichnet, dass** das Werkzeug (200) durch Spiralinterpolieren mit Hilfe einer Werkzeugmaschine mit digitaler Steuerung einer Bahn folgt.

6. Verfahren nach Anspruch 4, **dadurch gekennzeichnet, dass** das Kammwerkzeug (200) aufeinander folgende Bearbeitungen gemäß einem Schritt umfasst, der einer Teilung des Schritts, für den es vorgeformt ist, entspricht.

7. Verfahren nach Anspruch 6, **dadurch gekennzeichnet, dass** das Kammwerkzeug (200) aufeinander folgende Bearbeitungen gemäß einem Schritt umfasst, der einer Teilung durch 4 des Schritts, für den es vorgeformt ist, entspricht.

## Claims

1. Method for preparing the surface of a substrate (100) for the purpose of accepting and holding a coating sprayed by a plasma torch, said method being of the type of the one comprising a machining phase, **CHARACTERIZED IN THAT** it comprises the following phases:
- producing, by means of a machine tool (200) at least one groove with at least one angled edge,
- offsetting the tool (200), by moving the tool relative to the surface of the substrate (100), according to a direction perpendicular to the longitudinal axis of the groove and along a path shorter than the projected length of the angled edge,
- using said tool (200) on the angled edge of the groove in such a way as to subject this edge to stress and create another offset groove and so on and so forth such that the ribs (111, 112, 113, 114) finally obtained between each groove are irreversibly deformed under the action of the tool (200) and adopt undercut surfaces.

2. Method according to claim 1, **CHARACTERIZED IN THAT** the tool (200) is a milling tool set into rotation with respect to the part.

3. Method according to claim 1, **CHARACTERIZED IN THAT** the tool (200) is a milling tool having a plurality of cutting edges adopting a substantially triangular profile

4. Method according to claim 2, **CHARACTERIZED IN THAT** the tool (200) is a comb threading tool.

5. Method according to claim 2, **CHARACTERIZED IN THAT** the tool (200) follows a path by helical interpolation by means of a numerical-controlled machine tool.

6. Method according to claim 4, **CHARACTERIZED IN THAT** the comb tool (200) produces successive machinings according to a pitch corresponding to a division of the pitch for which it is preformed.

7. Method according to claim 6, **CHARACTERIZED IN THAT** the comb tool (200) produces successive machinings according to a pitch corresponding to a division by 4 of the pitch for which it is preformed.
